## Europäisches Patentamt
## European Patent Office
## Office européen des brevets

(11) Publication number: **0 094 253**
**A2**

# EUROPEAN PATENT APPLICATION

(21) Application number: **83302658.6**

(22) Date of filing: **11.05.83**

(51) Int. Cl.³: **H 04 B 7/185**

(30) Priority: **11.05.82 US 377093**

(43) Date of publication of application: **16.11.83**
**Bulletin 83/46**

(84) Designated Contracting States: **BE CH DE FR IT LI NL SE**

(71) Applicant: **TANDEM COMPUTERS INCORPORATED, 19333 Vallco Parkway, Cupertino California 95014 (US)**

(72) Inventor: **Menzies, Philip R., P.O. Box 2245, Redwood City California 94064 (US)**
Inventor: **Atwood, John G., Jr., 2168 Peachtree Lane, San Jose California 95128 (US)**
Inventor: **Hinders, David L., 10775 La Roda Drive, Cupertino California 95014 (US)**
Inventor: **Greig, David A., 1140 Trinity Drive, Menlo Park California 94025 (US)**

(74) Representative: **Ranson, Arthur Terence et al, W.P. Thompson & Co. Coopers Building Church Street, Liverpool L1 3AB (GB)**

(54) Satellite communications system for computer networks.

(57) A multi-node, satellite communications system employing a modified broadcast system is disclosed for use with distributed computer networks. The system involves a plurality of computer systems (network nodes) each capable of transmitting to any other node at a single unique frequency, but capable of receiving from all other nodes simultaneously. Each node in the n-node network comprises a single transmitter with up to n-1 receivers, with each node capable of arbitrating a plurality of requests for transmission access. The invention encompasses a method of communicating digital information in a network of geographically distributed computers.

0094253

-1-

## DESCRIPTION

## SATELLITE COMMUNICATIONS SYSTEM FOR COMPUTER NETWORKS

The present invention relates generally to telecommunications systems, namely satellite communication systems for computer networks, and more particularly to broadcast networks for digital telecommunications systems for use with computer networks.

With the advent of the computer age, communications between computers has developed to a point where high volume data streams exist between many remotely located computers. Typically, such data streams have been transmitted over leased telephone lines, or other similar means.

However, such leased telephone lines present problems. Among the problems involved are the need for frequent retransmission with consequent opportunity for failure, high expense, limited availability and long delays before installation, unavailability in some areas, and other problems. Another associated problem is that the communications service is provided by an outside vendor, leaving the user dependent on someone else for help in the event of problems. In addition, where the communications system includes a need for fully connected networks, the foregoing problems have been exacerbated. As a result, many computer users have sought other methods for computer to computer communication.

Another method which has been used for such communication has involved the use of various value added networks (VANs) such as Telenet or Tymnet, which tend to be implemented through protocols such as X.25 and others. While such VANs have offered improved communications capabilities, such networks generally are not intended for high volume usage, and begin to suffer from many of the same problems as leased lines

-2-

in that environment. As a result, VANs have not provided the requisit solution.

Because the above methods have the aforementioned and other limitations, satellite communications networks for use with computer systems have been implemented. Two typical satellite-based communications systems have existed up to the present time. In the first arrangement, each computer system (node) in a network includes a modulator-demodulator pair corresponding to each other node in the network with which it is to communicate, to permit simultaneous transmission and reception to those nodes. Such networks are generally referred to as FDMA networks. In the second prior art satellite network, referred to as TDMA networks, each node has only one modulator and one demodulator, and every user in the network listens to transmissions on the same frequency and uses that frequency for transmission on a time division basis.

Despite the fact that such satellite based networks have generally offered improved performance, certain problems persist. Thus, such prior art satellite networks tend to be very costly, and single points of failure exist which can cause the entire system to fail. In addition, such networks are generally provided by third party vendors, again removing system visibility from the user/customer. Still further, maintenance of such systems has generally required highly trained individuals, resulting in still more expense.

Thus there has been a need for an economical satellite-based communications system for use with computer networks which has relatively low maintenance requirements, has no single active point of failure, can be easily fully connected within the network, and provides the user with high visibility into the communications system.

The present invention provides a solution to substantially all of the foregoing problems in the following manners. A satellite based communication system for computer networks includes dual 56kbps paths driven from dedicated earth stations associated with each system node.

Each node in an n-node network, where n may for example be eight, includes a single modulator operating at a unique frequency, together with n-1 demodulators to permit simultaneous reception from every other node in the network. Each node includes arbitration logic to determine the availability of access to the transmitter in response to requests to transmit information.

In addition, the host computer associated with each node is capable of monitoring and controlling a plurality of remotely located test points within field replaceable units comprising the earth station, and correlating this information with the state of the digital communications streams to and from the host computer. This permits the user to monitor operation of the node and reduces maintenance costs.

According to the present invention, in a multi-node satellite communications system for computer to computer communication in which each node is associated with a computer and is capable of communicating with at least one other node by satellite, each node is characterised by a single modulator means for transmitting digital information in response to a request to transmit from a computer associated with that node, a plurality of demodulator means for receiving transmitted signals from other nodes in the system, and addressing means for distinguishing received messages addressed to a given node from those addressed to other nodes, and rejecting received messages not addressed to that node.

-4-

Also according to the present invention, a method of communicating digital information in a network of geographically distributed computers is characterised by receiving at least one request for transmitter access, arbitrating requests for transmitter access, providing access to the transmitter on a time division basis in response to the arbitrating step, and receiving on a plurality of demodulators a plurality of transmissions originating at other computers in the network.

The invention will now be further described by way of example, with reference to the accompanying drawings, in which:-

Figure 1 schematically illustrates the satellite communications system of the present invention;

Figure 2 schematically illustrates in block diagram form a node including an earth station within the network of Figure 1;

Figure 3 schematically illustrates in greater detail the earth station controller and associated electronics of Figure 2; and

Figure 4 schematically illustrates the transmit multiplexer of Figure 3.

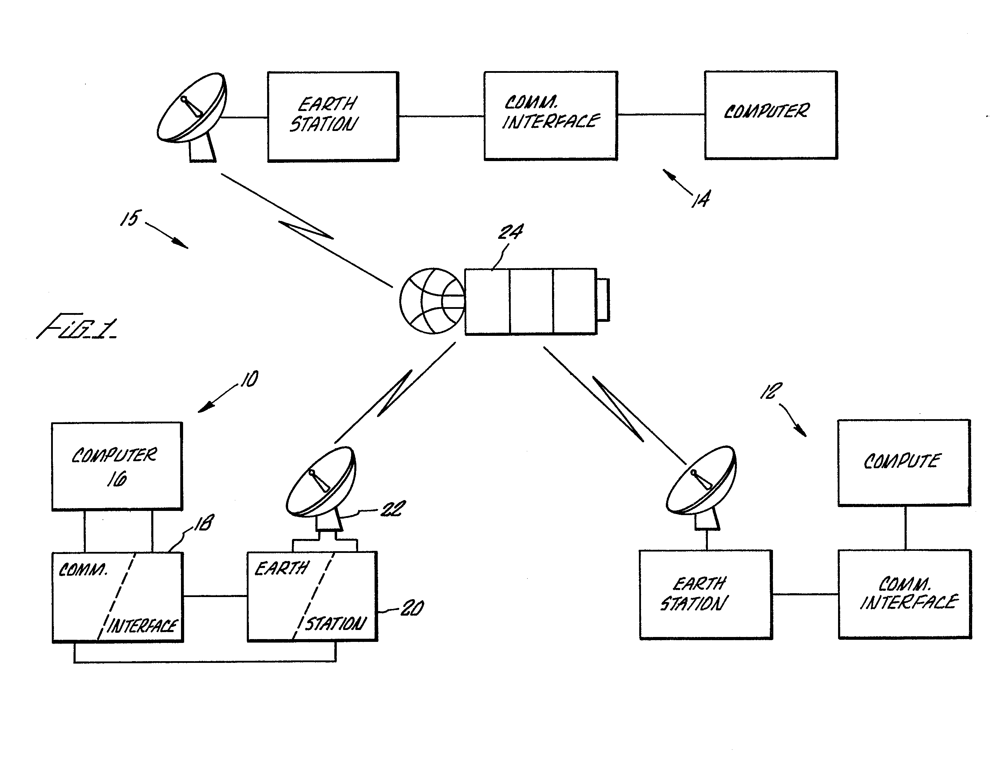

Referring firstly to Figure 1, three nodes 10, 12 and 14 of an n-node system 15 according to the present invention are shown. Each node is identical, and thus only the node 10 will be described in detail. Although only three nodes are shown, there may for example be eight nodes in the actual system, or some other suitable number.

The node 10 includes dual communications channels, each of which communicates with a local computer or computer network 16. Each computer 16 in turn controls and communicates bidirectionally with a dual channel communications interface 18. The interface communicates with earth station circuitry 20, which again has provision for dual channel operation. Finally, the earth station circuitry transmits information to and receives information from an antenna 22, again in a dual channel arrangement, which represents the last segment of the node 10. The antenna 22 then communicates with the antenna of the remaining nodes via a satellite 24.

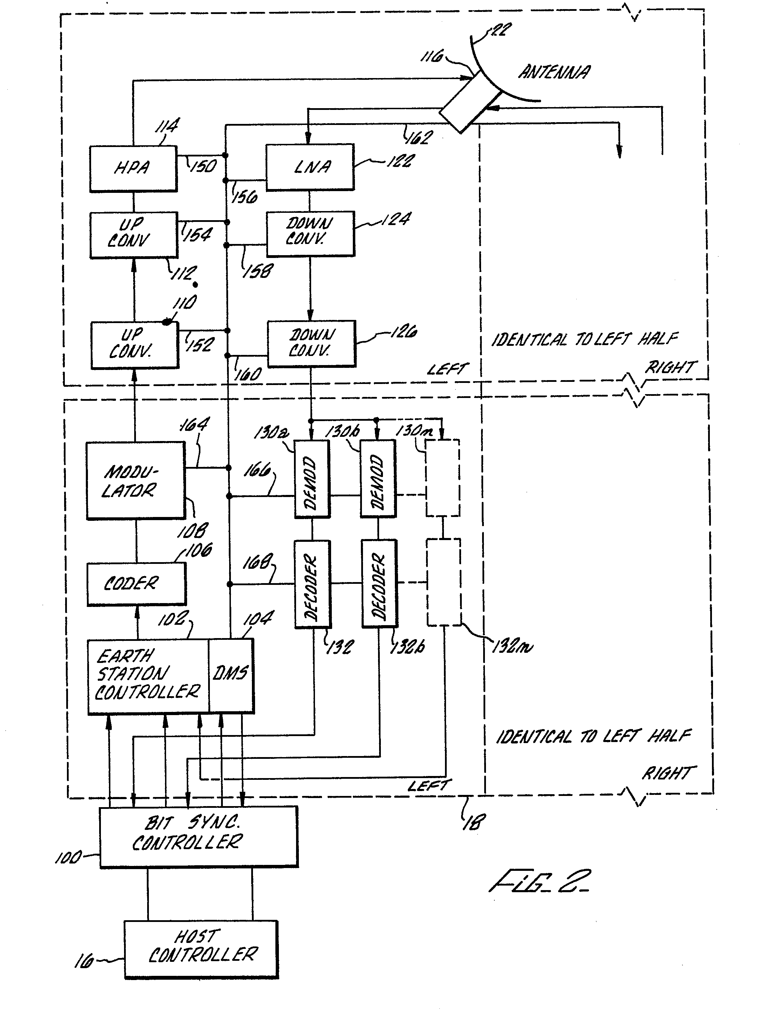

Referring next to Figure 2, which schematically illustrates in greater detail the communications interface 28 and earth station circuitry 20, the dual communications channels, which will be referred to for convenience as a left channel and a right channel, can be better appreciated. In addition, the broadcast arrangement of the present system can be further understood.

In Figure 2, the computer 16 communicates, on each channel with the communications interface 18 through a bit synchronous controller 100. More specifically, for outgoing communications the bit sync controller 100 communicates with an earth station controller 102 and a diagnostic monitoring system 104 which included a plurality of test points discussed in greater detail hereinafter.

When transmission access is requested, the computer enables an arbitration protocol in the earth station controller 102 which grants transmitter access. The data is then encoded by an encoder 106 which may be of the type described in European Patent Application No.          , filed concurrently herewith, and entitled "Integrated Scrambler-Encoder Using PN Sequence Generator". The encoder 106 then places the data to be transmitted into block code or other suitable format, and forwards it to a modulator 108.

The modulator 108 then places the information on a carrier within a 36 megahertz bandwidth centred at 70 megahertz, from which it passes to the earth station circuitry 20. The earth station circuitry 20 then operates on the signal from the modulator 108 by passing it through a first up converter 110. The first up converter 110 provides a 500 megahertz bandwidth output centred at 657 megahertz, which is forwarded to a second up converter 112. In a fashion similar to the first up converter, the second up converter 112 operates on the 407 to 907 megahertz signal and produces at its output a 500 megahertz bandwidth signal centred at 6.175 gigahertz. The 5.925 to 6.425 gigahertz signal is then passed through a high-power amplifier 114 to an orthomode junction 116 or other suitable apparatus. The orthomode junction 116 then communicates with the antenna 22 to transmit the data to the appropriate node. In this manner the system transmits information at a 56 kbps rate.

Once the signal from the node 10 is transmitted, it is forwarded to the satellite 24 along with all other transmissions from all other nodes in the network. Each of these transmissions is then received at each of the nodes within the system, or, for the present example, each transmission is received at each node 10, 12 and 14. Although not necessary, each transmission is monitored by the transmitting station for diagnostic purposes. If such diagnostic purposes were not included, messages transmitted by a node would be received only at the other nodes in the network.

Each node receives each other transmission, again through the antenna 22 and orthomode junction 116. Each such transmission is then provided to the earth station circuitry 20, and more specifically to a low noise amplifier 122. The low noise amplifier 122 provides at its output a 500 megahertz bandwidth signal centred at 3.95 gigahertz, which is then passed through first down converter 124 to yield a 500 megahertz bandwidth signal centred at 657 megahertz. The output of the first down converter 124 is then passed through a second down converter 126 which outputs a 36 megahertz bandwidth signal centred at 70 megahertz. At this point the received signal is passed from the earth station circuitry 20 to the communications interface 18.

Once within the communications interface 18, the signal is fed to a plurality of demodulators 130a-n and other associated electronics. For an n-node system with self-monitoring, as noted above, n demodulators are needed for each of the two channels. With such an arrangement, each incoming carrier is selected from the incoming signal by a demodulator 130, which corresponds in function to the modulator 108. Each message is then decoded by one of a plurality of decoders 132a-n in an operation corresponding to the encoding operation performed by the encoder 106.

Finally, the incoming messages are provided to the computer 16 through the big sync controller 100. Once received in the computer 16, each message is identified by its address bits, and if the incoming message is not addressed to the particular receiving node, the message is discarded. In this manner only those messages addressed to the particular node are operated upon by the local computer network.

It will further be appreciated from Figure 2 that, because the right channel operates simultaneously with the left channel, a total communications path of 112 kbps exists. While numerous devices will permit such dual channel operation, including dual antennae, an orthomode junction which separates horizontal and vertical polarizations, is presently preferred, since this will permit use of a single dish antenna. Most

-8-

satellites are capable of handling both polarizations. It will be appreciated that the arrangement of Figures 1 and 2 thus provide a satellite communications system having no single active point of failure which is capable of causing the system as a whole to fail. Likewise, the dual channel arrangement permits repairs to be made to one channel while the other channel remains on-line.

In addition, the diagnostic monitoring system mentioned previously assists in monitoring and identifying the performance of both local and remote components, thus improving greatly the maintainability of the node and system. The diagnostic monitoring system 104 communicates with a plurality of test points within both the earth station circuit 20 and communications interface 18. More specifically, the diagnostic monitoring system 104 monitors reflected power, forward power, current, and temperature in the high power amplifier 114 via lines 150. Similarly, the diagnostic monitoring system 104 monitors input power, local oscillator power, output power, phase lock control voltage, and phase lock condition in the second converter 112 via line 154. These devices may be regarded as a transmit field replaceable unit (FRU).

On the receiver side, the low noise amplifier 122 and down converter 124 may be regarded as a single FRU and are monitored via lines 156 and 158. Parameters monitored within the receiver FRU are local oscillator power, low noise amplifier FET current, IF amplifier sum current, oscillator oven temperature, and package temperature. Other parameters are monitored in other field replaceable units; for example, the high power amplifier power supply, five volt supply and AC power monitor are monitored in the RF module power supply FRU, while local oscillator power, IF input signal presence, IF output power, and box temperature are monitored in the 70 Mhz up converter FRU. Similarly, IF amplifier output, local oscillator power, and oven current are monitored in the 70 Mhz down converter FRU. Likewise, the five volt supply, fifteen volt supply, and AC power are monitored in the 70 Mhz IF FRU.

In addition, various parameters associated with the antenna 22 and orthomode junction 116, such as antenna skin temperature, antenna moisture, and orthomode junction pressurization are monitored by the data monitoring system 104 on lines 162. Other parameters of the modulator 108, demodulators 130a-n and decoders 132a-n are similarly monitored via lines 164, 166 and 168, respectively.

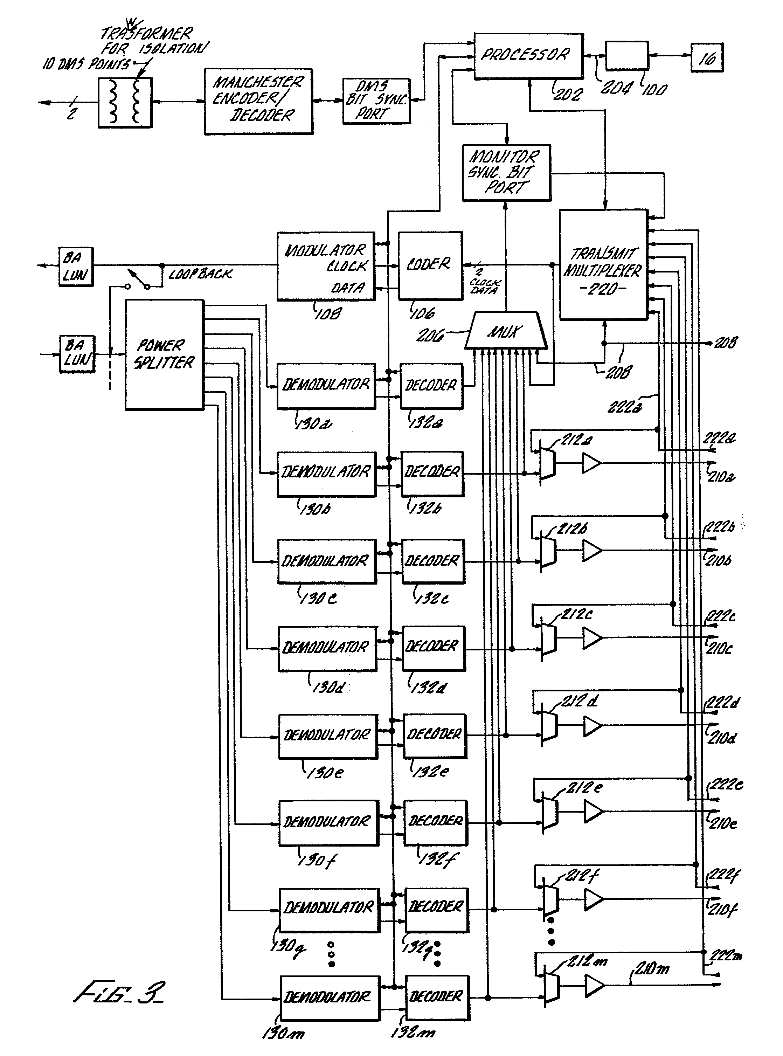

Turning next to Figure 3, the structure of the earth station controller 102 can be better appreciated. An earth station controller processor 202, which may, for example, include CPU and DMA circuits together with 64 kilobytes of RAM and four kilobytes of ROM as well as timing circuits, communicates with the bit sync controller 100 through lines 204, which in turn communicates with the computer 16. The processor 202 can select an incoming message stream received at the demodulators 130a-n and decoders 132a-n through a mux 206, which also includes provision for expansion via a line 208. The outputs of the decoders 132a-n are also provided to the computer 16 through a plurality of ports 210a-210m. For diagnostic loop back purposes, two-input muxes 212a-212m may be provided between the decoders 132a-m and ports 210a-m, with one input being provided by the decoder 132 and the remaining input being looped back from the data port itself. In addition, the data may, for example, be provided at RS-422 standard levels in accordance with an RS-449 protocol, at 56K baud.

As will be remembered from the discussion of Figure 2, the earth station controller 102 also arbitrates requests to send. This feature is controlled by a transmit mux 220, which is in turn controlled by the processor 202. The transmit mux 220 receives a request to send from the ports of the computer 16 via line 222a-m, which then notifies the processor 202. The processor 202 then grants access to one of the requesting ports by asserting a clear-to-send signal, which connects the data lines from the appropriate computer port to the coder 106 and thus to the modulator 108 as in Figure 2, causing a transmission to occur.

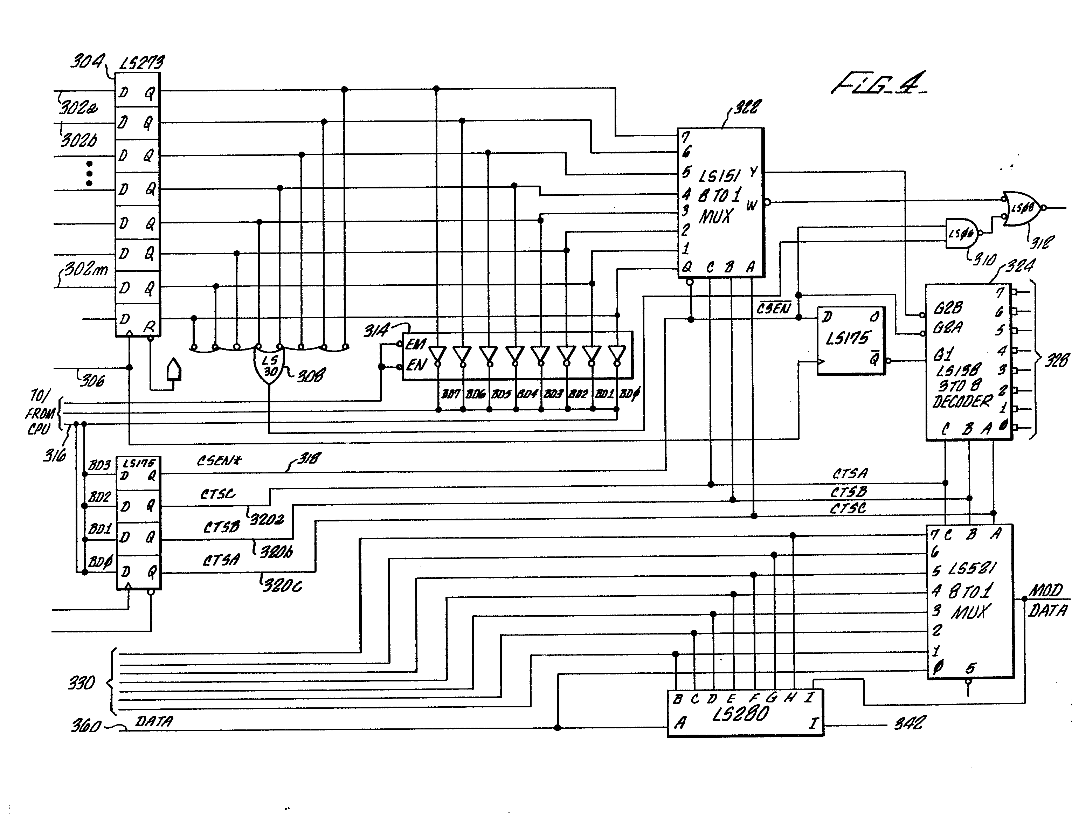

Referring to Figure 4, which illustrates the transmit multiplexer 220 in greater detail, the manner in which arbitration occurs can be better understood. The transmit multiplexer receives a request-to-send signal on lines 302a-m, where they are passed through a latch 304. The latch 304 is clocked by the clock of the processor 202 on a line 306 causing the request-to-send signals to be synchronized to the processor clock.

The synchronized signals are then logically Or'ed in a gate 308, which then feeds gates 310 and 312 to generate an interrupt for the processor 202. The processor 202 then polls the lines 302 by monitoring RDRTS gates 314. The processor 202 then implements its polling algorithm and selects one of the ports actively requesting to send. The processor then provides a control sequence on a bus 316, which activates an enable-clear-to-send line 318 and also places a three-bit code on encoded clear-to-send lines 320a-c. The code on the lines 320a-c then controls an 8-to-1 mux 322, a three-to-eight decoder 324, and also an 8-to-1 mux 326. This provides a clear-to-send signal on the appropriate one of the lines 328, permitting the bit sync port to begin sending its data via lines 330, connects the transmit data line from that port to the encoder 106 at the line 332, and switches the interrupt line to the CPU to monitor the selected request-to-send line. It will be appreciated by those skilled in the art that three-state devices may be required at some points.

When the port is done sending its data, the associated line 302 goes inactive, causing another interrupt to the processor 202 via the logic 310 and 312. The processor 202 then repolls the other lines 302. If no request exists, the transmit mux 220 goes inactive. If a request exists, the operation repeats for that bit sync port in the same manner as discussed above.

To avoid erroneous data transmissions which might occur if more than one data port were, through an error, able to be connected to the transmit mux 220 at once, a nine-bit parity checker 340 is provided which provides a signal to the processor on a line 342 if more than one port sends data at a time. In addition, the eighth input to the transmit mux, on a line 360, can be used by a bit sync port local to the earth station controller to generate test messages for diagnostic purposes.

Having fully described one embodiment of the present invention, it will be understood that numerous equivalents and alternatives will be apparent to those skilled in the art, given the teachings herein. It is to be understood that those alternatives and equivalents are intended to be included in the scope of the appended claims.

. . . . . . . . . . . . . . . . . . . . . . . . . . . . . . . . . . . . . . . . . . . . . . . . . . . . . . . . . . . . . . . . . . . . .

CLAIMS

1. A multi-node satellite communications system for computer to computer communication in which each node is associated with a computer and is capable of communicating with at least one other node by satellite, each node being characterised by a single modulator means for transmitting digital information inresponse to a request to transmit from a computer associated with that node, a plurality of demodulator means for receiving transmitted signals from other nodes in the system, and addressing means for distinguishing received messages addressed to a given node from those addressed to other nodes, and rejecting received messages not addressed to that node.

2. A multi-node satellite communications system as claimed in claim 1, further characterised by arbitration means responsive to requests to transmit for selecting one of a plurality of requesting data ports and allowing that data port access to the modulator means.

3. A multi-node satellite communications system as claimed in claim 1 or 2, characterised by a left channel capable of handling a first data stream, a right channel capable of handling a second data stream, each channel having transmit and receive means, with the transmit and receive means of the left channel being operatively independent from the transmit and receive means of the right channel such that a failure of a component in one channel does not adversely affect the capability of the remaining channel to handle its data stream.

4. A multi-note satellite communications system as claimed in claim 3, further characterised by monitor means located within each channel for monitoring operating conditions of that channel and adapted to communicate such information to the computer associated with that transponder for correlation with channel operation.

5. A method of communicating digital information in a network of geographically distributed computers characterised by the steps of receiving at least one request for transmitter access, arbitrating requests for transmitter access, providing access to the transmitter on a time division basis in response to the arbitrating step, and receiving on a plurality of demodulators a plurality of transmissions originating at other computers in the network.

6. A multi-node satellite communications system for computer to computer communication substantially as herein described with reference to and as illustrated in the accompanying drawings.

7. A method of communicating digital information in a network of geographically distributed computers substantially as herein described with reference to the accompanying drawings.

................................................................

_FiG.1_

EARTH STATION

COMM. INTERFACE

COMPUTER

14

15

24

COMPUTER 16

10

18

COMM. INTERFACE

EARTH STATION

22

20

EARTH STATION

12

COMPUTE

COMM. INTERFACE

0094253

1/4

FIG. 2

FIG. 3

FIG. 4